# DEMANDE DE BREVET EUROPEEN

(11) **EP 2 731 184 A1**
(43) Date de publication de la demande: **14.05.2014**
(21) Numéro de dépôt: 13190177.9
(22) Date de dépôt: 25.10.2013
(51) Int. Cl.: H01M 4/88, H01M 8/10

(54) **Structuration d'electrodes de pemfc**

(30) Priorité: 08.11.2012 FR 1260601
(71) Demandeur: COMMISSARIAT A L'ENERGIE ATOMIQUE ET AUX ENERGIES ALTERNATIVES, 75015 Paris (FR)
(72) Inventeur: VINCENT, Rémi, 38000 GRENOBLE (FR); MERCIER, Anne-Gaëlle, 71230 SAINT VALLIER (FR)
(74) Mandataire: Cabinet Laurent & Charras

(57) **Abrégé**

La présente invention concerne un procédé de dépôt, par impression jet d'encre à la demande (DOD), de la couche catalytique d'une pile à combustible comprenant le dépôt, sur une surface d'impression (8), d'une encre générant des structures (114) de forme sensiblement circulaire comprenant un bourrelet (9) à leur périphérie.

## Description

### DOMAINE DE L'INVENTION

La présente invention se rapporte à la fabrication d'électrodes structurées, par la technique d'impression par jet d'encre, plus précisément par jet d'encre à la demande (DOD pour « *Drop On Demand* » ou « *microdispersing* »). Selon l'invention, les électrodes structurées se présentent sous forme de structures sensiblement circulaires comprenant un bourrelet à leur périphérie, qui résultent d'un phénomène appelé « *coffee ring* ».

L'invention trouve notamment application dans le domaine des piles à combustible ou PEMFC (pour l'acronyme anglo-saxon « *Polymer Electrolyte Membrane Fuel Cell* »). En effet et de manière inattendue, une pile dotée de telles électrodes présente des performances améliorées.

### ETAT ANTERIEUR DE LA TECHNIQUE

Le domaine des piles à combustible suscite de nombreuses recherches visant à améliorer les performances et à réduire les coûts de production de ces dispositifs électrochimiques. Les piles à combustible sont notamment perçues comme une alternative intéressante aux sources d'énergie reposant sur l'utilisation d'hydrocarbures, dont les ressources sont limitées et dont la combustion génère une pollution indésirable.

Les piles à combustible fonctionnent sur le principe de l'oxydation d'un combustible, par exemple de l'hydrogène ou H₂, au niveau d'une première électrode appelée anode, combinée à la réduction de l'oxygène ou O₂, au niveau d'une seconde électrode appelée cathode, dans le but de produire un courant électrique. Ces électrodes sont disposées de part et d'autre d'une membrane électrolytique, conductrice protonique, par exemple en Nafion^{®}, formant ainsi un assemblage membrane-électrode ou AME. Par ailleurs, de part et d'autre de l'AME sont disposées des couches de diffusion des gaz ou GDL (pour l'acronyme anglo-saxon « Gaz Diffusion Layer »), généralement en noir de carbone.

Pour accélérer les réactions, les couches catalytiques ou couches actives formant les électrodes contiennent, outre un ionomère avantageusement de même nature que le polymère constituant la membrane, un catalyseur se présentant avantageusement sous forme de particules catalytiques. Un catalyseur particulièrement efficace est le platine, éventuellement sous forme de carbone platiné. Toutefois, celui-ci présente l'inconvénient d'être très coûteux.

En pratique, les électrodes d'une pile à combustible sont déposées soit sur la membrane électrolytique, soit sur les couches de diffusion des gaz ou GDL. De nombreux développements se sont donc intéressés aux techniques et aux conditions de dépôt du catalyseur, de telle sorte à obtenir des électrodes performantes à un coût réduit.

L'une des options pour réduire le coût de production d'une telle électrode consiste à diminuer l'épaisseur de la couche catalytique. Ainsi, le procédé d'impression par jet d'encre DOD permet de déposer un volume de quelques picolitres par goutte d'un mélange liquide comprenant le catalyseur. Après séchage et évaporation des autres constituants de l'encre, seuls le catalyseur et l'ionomère restent sur la surface imprimée.

La faisabilité de cette technique d'impression, dans le cadre du dépôt de la couche active d'une PEMFC, a été mise en évidence par Towne et al. (Journal of Power Sources, 171, (2007) 575-584), qui ont en outre montré que cette technique permettait d'obtenir un dépôt résistant, souple et ne nécessitant pas d'étape d'exposition à une forte pression pour que le catalyseur adhère.

L'impression par jet d'encre DOD est un procédé extrêmement répandu, par exemple mis en oeuvre dans les dispositifs d'impression bureautiques, dont la technologie est bien maîtrisée. Towne *et al.* ont montré qu'une encre contenant des particules de platine, de l'eau dé-ionisée pour solubiliser l'ensemble, et un mélange d'eau, d'éthylène glycol et d'isopropanol pour ajuster la viscosité et la tension de surface des gouttes, était compatible avec les dispositifs d'impression jet d'encre DOD, notamment avec les têtes d'impression.

Ainsi, le procédé d'impression par jet d'encre DOD offre une grande flexibilité au niveau des motifs à imprimer.

Ce procédé d'impression permet également d'avoir un contrôle précis de l'emplacement des gouttes imprimées.

D'autre part, comme l'ont montré Taylor et al. (Journal of Power Sources 171 (2007), 101-106), ce procédé permet d'augmenter la part de platine effectivement utilisée dans le processus de catalyse des réactions d'oxydo-réduction. Ce document rapporte également la réalisation de structures multicouches de platine, présentant un gradient en concentration de platine dans l'épaisseur du dépôt.

En outre et comme révélé par Saha et al. (Journal of The Electrochemical Society, 158, (2011), B562-B567), il est possible de réduire le chargement en platine de la surface d'une électrode jusqu'à 0,02mgPt/cm².

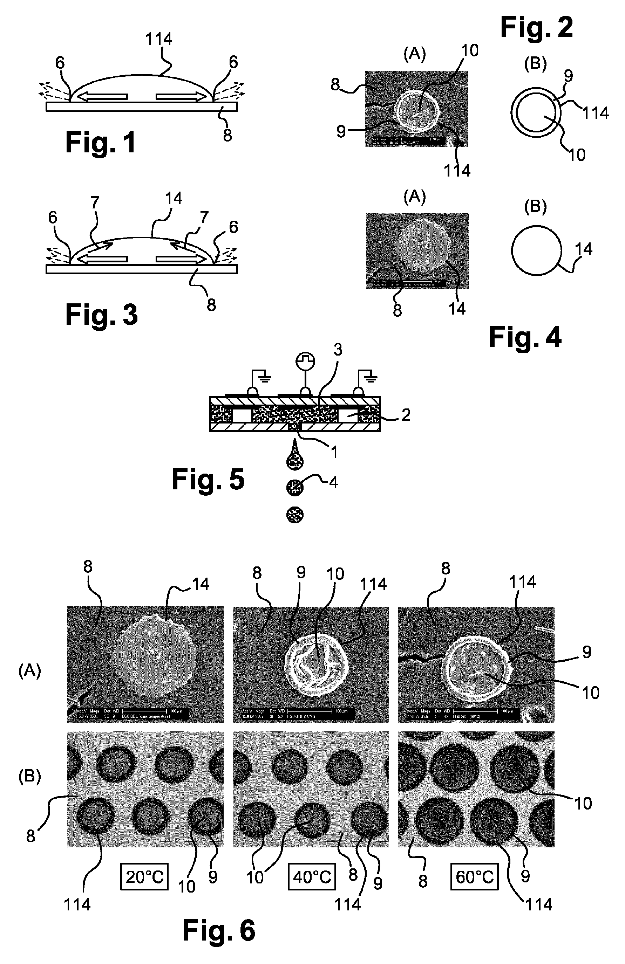

L'utilisation d'un procédé d'impression jet d'encre, en particulier de type DOD, se heurte cependant à deux contraintes :
- d'une part, les buses d'impression sont sensibles à l'encrassement par les particules catalytiques contenues dans l'encre ;
- d'autre part, au cours du séchage des gouttes, les particules catalytiques peuvent être redistribuées de manière non homogène sur la surface imprimée, selon un phénomène physique appelé « coffee ring » : En séchant, les gouttes laissent apparaître des structures de forme sensiblement circulaire (similaire à celle des gouttes) mais présentant une épaisseur irrégulière, à savoir des bourrelets ou des anneaux (« coffee stains » ou « coffee rings ») à leur périphérie (Figure 2).

Pour éviter le problème d'encrassement des buses des têtes d'impression, il est courant de veiller à ce que l'encre ait une composition minimisant le risque de séchage. Les caractéristiques de l'encre doivent de ce fait répondre à des exigences strictes en termes de rhéologie, de tension de surface, de dispersion et de volatilité. Ainsi et en relation avec la technique d'impression jet d'encre DOD, il est préconisé une encre possédant une viscosité comprise entre 1 et 10 mPa.s, une tension de surface comprise entre 30 et 35 mN/m, et une taille de particules inférieure à 10 fois la taille de l'ouverture de la buse, en pratique inférieure à un micromètre (Blayo ; Techniques de l'ingénieur, référence J2290-2, 2007).

L'un des éléments clés permettant d'éviter le séchage de l'encre dans les buses est l'ajout d'un solvant à haut point d'ébullition, communément appelé humectant, comme l'éthylène glycol. L'article de Clavert (Chem. Mater., 2001, 13, 3299-3305) précise qu'une proportion massique d'humectant comprise entre 10% et 20% de la masse totale de l'encre est nécessaire pour éviter un séchage de l'encre sur les buses des têtes d'impression.

Le document US 2008/0009409, quant à lui, décrit une encre pour la technique DOD contenant des particules de catalyseur de taille inférieure à 200 nanomètres, et dans laquelle la proportion en catalyseur avoisine 60% de la masse totale de l'encre.

Un second problème auquel est confronté l'homme du métier en relation avec l'impression par jet d'encre DOD est le phénomène de « coffe ring ». Comme illustré à la figure 1, ce phénomène survient à cause d'une évaporation plus rapide du liquide au niveau de la ligne triple **6** (ligne à l'interface goutte - surface support - air), que dans la région centrale de la goutte. Ainsi, les particules contenues dans la goutte sont soumises à des mouvements de convection les forçant à s'accumuler sur cette ligne triple. Il en résulte une concentration importante de particules sur les bords de la goutte initialement déposée, ce qui génère une structure de forme sensiblement circulaire **114,** présentant en périphérie un bourrelet ou anneau **9,** au niveau duquel les particules de catalyseur se sont concentrées, au contraire du centre **10** de la structure où les particules sont en faible quantité (Figure 2).

Pour lutter contre cette hétérogénéité de structure, considérée jusqu'alors comme un défaut, de nombreuses études ont été réalisées : Gans et al. (Langmuir, 2004, 20, 7789-7793) ont établi l'importance du solvant dans la structuration des particules une fois que la goutte déposée a séché. Soltman et al. (Langmuir, 2008, 24, 2224-2231) ont montré qu'il est possible de réduire l'effet de « coffee ring » en augmentant la température de la surface sur laquelle une goutte est déposée.

Une autre méthode pour lutter contre le phénomène de « coffee ring » a été proposée par Lim et al. (Adv. Funct. Mater., 2008, 18, 229-234). Elle consiste à ajouter un solvant possédant un haut point d'ébullition et une tension de surface faible, permettant ainsi d'augmenter l'apparition de courants appelés courants de Marangoni 7, contraires aux mouvements de convection à l'origine du « coffee ring ». Les courants de Marangoni 7 tendent à faire migrer le fluide contenu dans la goutte, ainsi que les particules que la goutte contient, vers le centre de la goutte, en raison du gradient de tension superficielle créé par la coexistence de plusieurs solvants différents dans la goutte (Figure 3). La figure 4 illustre l'apparence d'une goutte **14** séchée n'ayant pas généré de « coffee ring » qui se présente certes comme une structure de forme sensiblement circulaire mais d'épaisseur relativement homogène.

En conclusion, les différents flux dans la goutte et la morphologie de la structure résiduelle, une fois que la goutte déposée a séché, dépendent de trois facteurs principaux : l'encre, notamment la nature et la proportion des solvants, le support d'impression, notamment sa nature chimique, sa température, l'angle de contact entre l'encre et le support, et le procédé d'impression utilisé, notamment le diamètre des buses, le nombre de gouttes et la fréquence et la vitesse d'éjection des gouttes.

Les perfectionnements antérieurs des électrodes des piles à combustibles ont ainsi essentiellement consisté à réduire la quantité de catalyseur déposé, pour réduire leur coût de production, et garantir un dépôt avec le moins de défauts possible. Ce second paramètre a jusqu'à présent consisté à éviter le plus possible le phénomène de « coffee ring ».

### EXPOSE DE L'INVENTION

La présente invention repose sur la mise en évidence de propriétés avantageuses et inattendues d'électrodes présentant une structure caractéristique du « coffee ring », dans le cadre d'une pile à combustible.

Selon l'invention, on définit des structures caractéristiques du « coffee ring » comme des structures de forme sensiblement circulaire, présentant un bourrelet à leur périphérie.

La forme sensiblement circulaire est liée au fait que ces structures résultent du séchage de gouttes éjectées par le dispositif d'impression par jet d'encre DOD. En pratique, la taille des gouttes est conditionnée par la taille des buses d'éjection. Typiquement, celles-ci possèdent une ouverture comprise entre 10 et 100 micromètres, typiquement de l'ordre de 25 micromètres.

De manière avantageuse, les structures de forme sensiblement circulaire selon l'invention ont une taille ou un diamètre extérieur inférieur à 1 millimètre (1mm), avantageusement inférieur ou égal à 500 micromètres (500µm), encore plus avantageusement inférieur ou égal à 200 micromètres (200µm). Par ailleurs, leur taille est avantageusement supérieure ou égale à 10 micromètres (10µm), voire 20 micromètres (20µm). Selon un mode de réalisation particulier, les structures selon l'invention ont un diamètre extérieur compris entre 20 et 200 micromètres, avantageusement égal à 50 micromètres. Fonctionnellement, les tailles mentionnées pour ces structures sont celles qui permettent d'aboutir aux meilleures performances courant-tension pour l'électrode ainsi produite.

De manière caractéristique, ces structures ne présentant pas une épaisseur uniforme. Plus précisément, elles présentent un bourrelet, c'est-à-dire un épaississement, pouvant prendre la forme d'un anneau, à leur périphérie. Ces bourrelets sont détectables et peuvent être caractérisés à l'aide de la technique de microscopie électronique à balayage (MEB) ou par mesure de topographie de surface.

Avantageusement, la largeur du bourrelet représente de 5 à 20% de la taille ou du diamètre extérieur des structures. Ainsi et à titre d'exemple :
- le bourrelet d'une structure de diamètre 20 micromètres présente avantageusement une largeur comprise entre 1 et 4 micromètres ;
- le bourrelet d'une structure de diamètre 200 micromètres présente avantageusement une largeur comprise entre 10 et 40 micromètres ;
- le bourrelet d'une structure de diamètre 50 micromètres présente avantageusement une largeur comprise entre 2,5 et 10 micromètres.

Par ailleurs et de manière encore plus avantageuse, ces bourrelets présentent une épaisseur du même ordre que leur largeur, en comparaison à l'épaisseur très faible au centre de la structure. Ainsi, l'épaisseur au centre peut varier entre 0,1% et 10% de l'épaisseur du bourrelet.

En outre, ces bourrelets sont caractérisés par leur forte concentration en matière (catalyseur et ionomère). De manière avantageuse, le bourrelet comprend au moins 70% en masse de la matière de la structure, voire 80%, voire même 90%.

Par définition, les structures selon l'invention sont constituées de catalyseur et avantageusement d'un ionomère, dans les mêmes proportions que dans l'encre ayant servi à l'impression de ces structures.

Typiquement, le catalyseur est du platine. Le catalyseur se présente avantageusement sur un support carboné, tel que du noir de carbone. Dans le cas du platine, il est alors appelé carbone platiné. En outre, il se présente avantageusement sous forme de particules. De manière adaptée, la taille des particules de catalyseur est inférieure à 10 fois le diamètre de l'ouverture des buses, soit une taille maximale de particule inférieure à 1 micromètre, voire inférieure à 500 nm.

De manière adaptée, l'ionomère est un polymère comprenant des groupements ioniques, en particulier sulfoniques. Il peut s'agir d'un polymère de type PFSA (« *PerfluoroSulfonic Acid* »), en particulier du Nafion^{®}.

Ainsi et selon un premier aspect, la présente invention concerne une couche catalytique pour pile à combustible, se présentant sous forme de structures de forme sensiblement circulaire, comprenant un bourrelet à leur périphérie.

De manière adaptée et dans une couche, ces structures sont espacées les unes des autres d'une distance supérieure ou égale à 10 micromètres. En pratique, il s'agit d'une couche discontinue puisqu'en rapport avec la technique d'impression par jet d'encre DOD, la surface à imprimer est recouverte de manière discontinue de gouttes qui, en séchant, vont donner les structures recherchées.

Selon un mode de réalisation particulier en relation avec le dépôt successif de plusieurs couches de gouttes, la couche catalytique selon l'invention peut être constituée d'un empilement de couches de structure selon l'invention. En pratique, les structures de forme sensiblement circulaire comprenant un bourrelet à leur périphérie peuvent se chevaucher ou s'empiler.

Comme déjà dit, les structures selon l'invention se forment sur la surface imprimée. Dans le cadre de piles à combustible, la surface imprimée est avantageusement la membrane électrolytique ou une couche de diffusion des gaz (GDL).

Ainsi et selon un autre aspect, l'invention vise une membrane électrolytique pour pile à combustible présentant, sur au moins l'une de ses faces, des structures de forme sensiblement circulaire comprenant un bourrelet à leur périphérie, voire un empilement de telles structures.

Une telle membrane est avantageusement constituée du même ionomère que celui présent dans les structures, avantageusement un polymère de type PFSA tel que le Nafion^{®}. En vue de la réalisation d'un AME, la membrane électrolytique peut présenter de telles structures sur chacune de ses faces.

Selon un autre aspect, l'invention vise une couche de diffusion des gaz pour pile à combustible présentant, sur au moins l'une de ses faces, des structures de forme sensiblement circulaire comprenant un bourrelet à leur périphérie, voire un empilement de telles structures. Selon un mode de réalisation privilégié, chacune des deux couches de diffusion des gaz d'une pile à combustible présente sur l'une de ses faces, avantageusement celle orientée du côté de la membrane électrolytique, des structures telles que définies ci-dessus.

De manière classique, une couche de diffusion des gaz est un support à base de noir de carbone.

Avantageusement, le chargement en catalyseur, en particulier en platine, à la surface de la membrane ou de la couche de diffusion des gaz est compris entre 0,1 et 0,3 mg/cm².

Selon un mode de réalisation particulier, le chargement en catalyseur peut être plus important pour la cathode (qui peut représenter environ 2/3 de la charge catalytique totale) que pour l'anode (qui peut représenter environ 1/3 de la charge catalytique totale).

Un autre aspect de l'invention concerne une pile à combustible comprenant au moins une couche catalytique selon l'invention et/ou une membrane électrolytique selon l'invention et/ou une couche de diffusion des gaz selon l'invention. De manière inattendue et comme démontré dans le cadre de la présente demande, une telle pile à combustible présente des performances améliorées par rapport à une pile ne présentant pas ce type de structures.

Comme déjà dit, un critère important pour la formation de structures caractéristiques du « coffee ring » est la composition de l'encre servant à l'impression des gouttes générant ces structures. L'invention vise donc une encre qui, lorsqu'elle est déposée par impression par jet d'encre DOD, génère des structures de forme sensiblement circulaire comprenant un bourrelet à leur périphérie, caractéristiques du « coffee ring ».

Il a été mis en évidence, dans le cadre de l'invention, qu'un faible teneur en humectant, notamment en polyol, dans l'encre favorisait l'apparition du « coffee ring », alors que l'homme du métier considérait sa présence indispensable pour éviter le colmatage des buses d'éjection et en tout état de cause ne cherchait pas à favoriser le « coffee ring ».

Ainsi et de manière avantageuse, une encre mise en oeuvre dans le cadre de l'invention comprend une proportion massique en humectant, avantageusement en polyol, inférieure ou égale à 7%, voire inférieure ou égale à 6%. Par ailleurs et même si elle peut être nulle, sa proportion massique est avantageusement supérieure ou égale à 2%, voire supérieure ou égale à 3%. Dans un mode de réalisation privilégié, la proportion massique de l'humectant, avantageusement un polyol, encore plus avantageusement de l'éthylène glycol, représente de 5 à 6% de l'encre, par exemple 5,3%.

L'humectant selon l'invention est avantageusement un polyol tel que le glycérol ou un diol tel que l'éthylène glycol (ou glycol), le polyéthylène glycol ou le propylène glycol.

De manière classique, une encre selon l'invention comprend en outre un catalyseur, un ionomère, et un système solvant comprenant de l'eau avantageusement associée à un alcool. Le catalyseur et l'ionomère sont définis comme ci-dessus en rapport avec les structures obtenues.

De manière avantageuse et aux concentrations massiques indiquées, l'alcool permet d'augmenter la surface de mouillage de l'encre déposée sur la surface à imprimer et réduire l'angle de contact entre la goutte et la surface imprimée. Une surface de mouillage plus grande et un angle de contact plus petit permettent d'augmenter la précision du positionnement de la goutte sur la surface imprimée.

L'alcool est avantageusement de l'isopropanol, de l'éthanol ou du propanol, encore plus avantageusement de l'isopropanol.

Outre les proportions indiquées ci-dessus concernant l'humectant, avantageusement le polyol, les proportions massiques des autres constituants de l'encre selon l'invention sont préférentiellement les suivantes :
- entre 1,5% et 3,5% de catalyseur, avantageusement 2,3% ; et/ou
- entre 2,5% et 5% de ionomère (à 22% en poids sec), avantageusement 3,4% ; et/ou
- entre 50% et 85% d'eau, avantageusement 69% ; et/ou
- entre 10% et 40% d'alcool, avantageusement 20%.

Concernant l'ionomère, le pourcentage massique indiqué correspond au mélange de l'ionomère avec un solvant, dans le cas où l'ionomère représente 22% en poids sec du mélange. Dans le cas d'une autre présentation de l'ionomère, notamment à une autre teneur en poids sec, l'homme du métier peut aisément déterminer par conversion, la quantité à introduire.

Comme déjà dit, le catalyseur se présente avantageusement sous forme de catalyseur supporté par du carbone.

Ces gammes de concentrations prises individuellement ou en combinaison, correspondent à des gammes optimisées pour générer des structures selon l'invention, en d'autres termes pour favoriser le « coffee ring », lors du séchage des gouttes d'encre imprimées.

Selon un autre aspect, l'invention concerne donc l'utilisation d'une telle encre pour générer des structures de forme sensiblement circulaire comprenant un bourrelet à leur périphérie, après séchage des gouttes d'encre.

De manière adaptée, une telle encre, et plus généralement toute encre générant les structures recherchées dans le cadre de l'invention, est mise en oeuvre dans un procédé d'impression jet d'encre de type gouttes à la demande ou « DOD ». En d'autres termes, l'invention vise l'utilisation d'une encre générant des structures de forme sensiblement circulaire comprenant un bourrelet à leur périphérie, avantageusement d'une encre telle que décrite ci-dessus, pour l'impression par jet d'encre DOD de la couche catalytique d'une pile à combustible. Cette impression se fait avantageusement sur la membrane électrolytique ou sur la couche de diffusion des gaz (GDL).

Comme il ressort de la présente demande, une telle pile présente des performances électrochimiques améliorées. Par conséquent et selon un autre aspect, l'invention concerne l'utilisation d'une encre générant des structures de forme sensiblement circulaire comprenant un bourrelet à leur périphérie, avantageusement d'une encre comme décrite ci-dessus, pour améliorer les performances d'une pile à combustible. Selon un autre aspect, l'invention concerne donc un procédé de dépôt, par impression jet d'encre à la demande (DOD), de la couche catalytique d'une pile à combustible comprenant le dépôt, sur une surface d'impression, d'une encre générant des structures de forme sensiblement circulaire comprenant un bourrelet à leur périphérie.

Comme déjà dit, la surface d'impression est avantageusement la membrane électrolytique ou la couche de diffusion des gaz d'une pile à combustible.

De manière classique et en rapport avec un procédé d'impression jet d'encre de type gouttes à la demande ou « DOD », le procédé mis en oeuvre comprend les étapes suivantes :
- éjection des gouttes de l'encre à travers une buse d'impression en direction de la surface d'impression ;
- séchage des gouttes déposées, avantageusement à une température supérieure ou égale à 40 °C.

De manière classique, l'encre est contenue dans un réservoir.

De manière appropriée, seules les gouttes nécessaires à l'impression sont formées et éjectées. Avantageusement, le processus d'éjection des gouttes en direction de la surface d'impression se fait par l'activation d'un élément piézo-électrique ou thermique.

Comme déjà dit, la surface d'impression peut être la surface de la membrane électrolytique ou celle d'une couche de diffusion des gaz.

De manière avantageuse, les buses possèdent une ouverture de taille comprise entre 10 et 100 micromètres, par exemple 25 micromètres.

Par ailleurs, le procédé est optimisé en réalisant le séchage des gouttes à une température supérieure à 20 °C, avantageusement supérieure ou égale à 40 °C, voire de l'ordre de 60 °C, ce qui favorise encore le « coffee ring ». De manière avantageuse, il s'agit de la température à laquelle est porté le support ou la surface d'impression.

Le procédé d'impression par jet d'encre DOD peut avantageusement être répété plusieurs fois de suite, afin de constituer un empilement de couches structurées par « coffee ring ». De manière avantageuse, l'éjection des gouttes est réalisée lorsque les gouttes préalablement déposées sont sèches.

### DESCRIPTION SOMMAIRE DES FIGURES

L'invention sera mieux comprise à la lecture de la description qui suit, donnée uniquement à titre d'exemple, et réalisée en relation avec les dessins annexés, dans lesquels les mêmes références désignent des éléments identiques ou analogues et dans lesquels :
- la figure 1 est une vue schématique en section transversale d'une goutte d'encre générant du « coffee ring », déposée sur la surface imprimée.
- La figure 2 est une vue en MEB (A) ou schématique en perspective (B) d'une goutte d'encre séchée présentant les caractéristiques du « coffee ring ».
- La figure 3 est une vue schématique en section transversale d'une goutte d'encre ne favorisant pas l'apparition de « coffee ring », déposée sur la surface imprimée.
- La figure 4 est une vue en MEB (A) ou schématique en perspective (B) d'une goutte d'encre séchée ne présentant pas les caractéristiques du « coffee ring ».
- La figure 5 est une vue schématique en section transversale d'une tête d'impression d'une imprimante jet d'encre DOD mise en oeuvre dans le cadre de la présente invention.
- La figure 6 est une vue en MEB de gouttes d'une encre selon l'invention, déposées sur GDL (A) ou sur une membrane en Nafion^{®} (B), séchées aux températures indiquées (20 °C, 40 °C et 60 °C, respectivement).
- La figure 7 compare les performances en pile à combustible d'une électrode sans « coffee ring » et d'une électrode avec « coffee ring » selon l'invention.

Certains éléments de ces figures ont été agrandis pour faciliter leur compréhension et peuvent par conséquent ne pas être à l'échelle.

### DESCRIPTION DETAILLEE DE L'INVENTION

Pour la réalisation d'électrodes pour pile à combustible aux performances améliorées et peu coûteuses à produire, l'invention a mis en évidence l'intérêt de favoriser le « coffee ring » pour structurer lesdites électrodes et une encre adaptée à leur réalisation.

### 1/Définition de l'encre :

L'encre utilisée pour réaliser l'électrode - objet de l'invention doit être compatible avec des imprimantes jet d'encre de type gouttes à la demande ou « DOD ». La figure 5 illustre une tête d'impression d'une telle imprimante jet d'encre. La tête d'impression représentée comprend notamment une buse **1,** par laquelle l'encre s'échappe sous forme de gouttes **4.** La taille (ou le diamètre) des gouttes dépend ainsi notamment de l'ouverture des buses. L'éjection d'une goutte **4** peut être provoquée par différents moyens. Sur la figure 5, l'application d'un signal électrique à des éléments piézoélectriques **2** provoque une légère contraction du réservoir contenant l'encre **3** dans la tête d'impression. Il existe également d'autres technologies permettant de contrôler avec précision l'éjection d'une goutte par la buse d'une imprimante jet d'encre. Il est ainsi possible d'utiliser un élément chauffant pour former des bulles dans le réservoir contenant l'encre, modifiant la pression dans le réservoir et forçant ainsi quelques picolitres d'encre à être éjectés par la buse sous forme de gouttes. Il est aussi possible d'appliquer des ondes acoustiques au réservoir contenant l'encre ou bien encore un champ électrostatique pour éjecter une goutte.

Une encre particulièrement adaptée pour générer du « coffee ring » présente la composition suivante, en poids :
- catalyseur, avantageusement du carbone platiné, encore plus avantageusement TEC10V50E (Tanaka), comprenant 50% en masse de platine sur un support carboné : 2.3% ;
- ionomère, avantageusement du Nafion^{®}, encore plus avantageusement DE2020 (Dupont): 3.4% (l'ionomère représentant 22% en poids sec) ;
- eau : 69% ;
- alcool, avantageusement isopropanol (IPA) : 20% ;
- polyol, avantageusement éthylène glycol (EG) : 5.3%.

En parallèle, une encre ne générant pas de « coffee ring » a été testée. Elle présente la composition suivante. Il s'agit de la même formulation que ci-dessus mais avec une proportion massique de polyol, avantageusement d'éthylène glycol, égale à 30%.

### 2/Impression de l'encre :

L'encre dont la composition vient d'être décrite, est utilisée dans une imprimante jet d'encre DOD adaptée au dépôt de couches catalytiques de piles à combustible, sur la membrane électrolytique ou sur les GDL, comme illustrée à la figure 5.

Parmi les paramètres importants pour réaliser un dépôt de catalyseur garantissant de bonnes performances à l'électrode, il est avantageux de choisir la taille de la buse, conditionnant la taille des gouttes éjectées et donc la taille des structures « coffee rings » **114** obtenues, ainsi que la température à laquelle est portée la surface imprimée, à savoir la membrane polymère ou une GDL **8.**

Ainsi, une buse **1** possédant une ouverture de dimensions comprises entre 10 et 100 micromètres, offre des résultats avantageux en termes de performances d'électrodes obtenues. Avec de telles buses **1,** on obtient des structures sur l'électrode imprimée, une fois que la goutte à l'origine de ces structures a séché, ayant un diamètre compris entre 20 et 200 micromètres (Figure 2B). Avantageusement, on choisira une buse **1** de taille intermédiaire, de 25 micromètres d'ouverture. Une telle taille de buse **1** permet d'obtenir des « coffee rings » **114** sur l'électrode imprimée ayant un diamètre externe de 50 micromètres.

Il a aussi été montré qu'une température supérieure à 20 °C permettait de favoriser l'apparition du phénomène de « coffee ring » **114.** Avantageusement la surface **8** sur laquelle les gouttes d'encre **4** sont déposées est portée à une température de 40° C, voire 60°C (Figure 6).

Après séchage, il est possible d'imprimer une nouvelle couche de gouttes d'encre.

### 3/Description des électrodes structurées obtenues :

L'objectif de l'utilisateur d'une encre accentuant le phénomène de « coffee ring » est de structurer la surface d'une électrode à l'aide des structures de forme sensiblement circulaire présentant un bourrelet ou anneau **9** à leur périphérie, appelées « coffee rings » **114.** De telles structures sont notamment visualisables par microscopie électronique à balayage (MEB) ou par mesure de topographie de surface.

De manière adaptée, ces structures caractéristiques du « coffee ring » **114** sont comme représentées à la figure 2, avec un diamètre extérieur compris entre 20 et 200 micromètres, avantageusement égal à 50 micromètres.

Par ailleurs et comme illustré à la figure 6, l'espacement entre deux structures est avantageusement supérieur ou égal à 10 micromètres.

La structure optimale d'un « coffee ring » **114,** comme celui représenté sur la figure 2B, consiste en un anneau périphérique avec une forte concentration de catalyseur (au moins 70% en masse voire 90% en masse de la matière), formant ainsi un bourrelet circulaire **9** d'une largeur (correspondant également à son épaisseur) de 5 à 20% par rapport au diamètre extérieur du « coffee ring » **114,** avantageusement 10%. L'intérieur de cet anneau **10** est pour l'essentiel dépourvu de catalyseur et présente une épaisseur très faible.

Au contraire, l'encre décrite ci-dessus contenant 30% d'éthylène glycol génère des structures telles que celles montrées à la figure 4.

### 4/Performances des piles à combustible :

Comme déjà dit, cette impression peut aussi bien se faire sur la membrane (CCM pour dépôt d'encre sur membrane) que sur la couche de diffusions des gaz (CCB pour dépôt d'encre sur GDL). Après impression, l'AME est assemblé par pressage à chaud, typiquement à une température égale à 135°C.

Une étude courant - tension a comparé les performances des électrodes obtenues à partir des deux encres décrites ci-dessus, celle selon l'invention générant du « coffee ring » et celle selon l'art antérieur formulée pour éviter l'apparition du « coffee ring ».

En pratique, le même catalyseur a été déposé à l'aide du même procédé jet d'encre DOD.

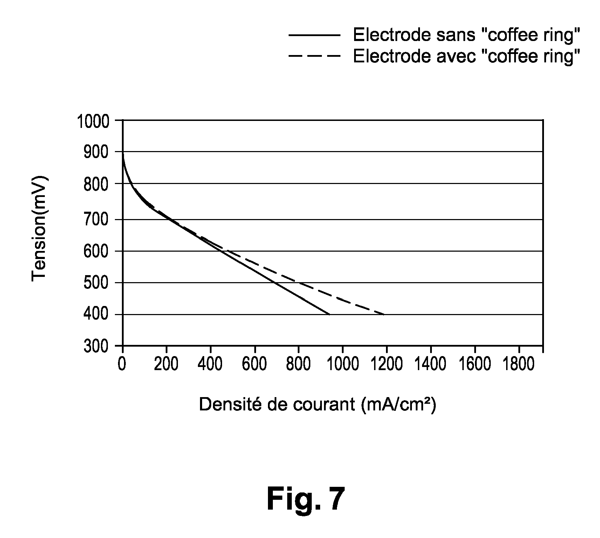

Comme illustré à la figure 7, cette étude a montré que la structuration des électrodes d'une pile à combustible sous forme des structures caractéristiques du « coffee ring » **114,** à savoir des structures de forme sensiblement circulaire présentant un bourrelet **9** à leur périphérie, permet de générer une densité de courant, à tension fixée, supérieure à celle observée dans les électrodes dépourvues des structures caractéristiques du « coffee ring », en particulier à densité de courant élevée.

En conclusion, les électrodes structurées selon l'invention présentent les mêmes avantages en termes de coûts de production et de techniques mises en oeuvre que des électrodes ne présentant pas de « coffee ring », tout en bénéficiant de performances courant-tension supérieures.

## Revendications

1. Procédé de dépôt, par impression jet d'encre à la demande (DOD), de la couche catalytique d'une pile à combustible comprenant le dépôt, sur une surface d'impression (8), d'une encre générant des structures (114) de forme sensiblement circulaire comprenant un bourrelet (9) à leur périphérie.

2. Procédé de dépôt selon la revendication 1 ***caractérisé* en ce que** la surface d'impression (8) est la membrane électrolytique (8) ou la couche de diffusion des gaz (8) de la pile à combustible.

3. Procédé de dépôt selon l'une des revendications précédentes ***caractérisé* en ce qu'il** comprend les étapes suivantes :
- éjection de gouttes (4) de l'encre à travers une buse d'impression (1), possédant avantageusement une ouverture dont le diamètre est compris entre 10 et 100 micromètres, en direction de la surface d'impression (8) ;
- séchage des gouttes (4) déposées, avantageusement à une température supérieure ou égale à 40 °C.

4. Procédé de dépôt selon la revendication 3, selon lequel les étapes d'éjection des gouttes (4) en direction de la surface d'impression (8) et de séchage sont répétées de manière itérative.

5. Couche catalytique pour pile à combustible susceptible d'être obtenue à l'aide du procédé selon l'une des revendications 1 à 4, se présentant sous forme de structures (114) de forme sensiblement circulaire comprenant un bourrelet à leur périphérie (9) et ayant un diamètre extérieur inférieur à 1 millimètre, avantageusement compris entre 20 et 200 micromètres.

6. Couche catalytique pour pile à combustible selon la revendication 5, ***caractérisée* en ce que** les structures (114) ont un diamètre extérieur égal à 50 micromètres.

7. Couche catalytique pour pile à combustible selon la revendication 5 ou 6, ***caractérisée* en ce que** la largeur des bourrelets (9) des structures représente de 5 à 20% du diamètre extérieur des structures (114).

8. Couche catalytique pour pile à combustible selon l'une des revendications 5 à 7, ***caractérisée* en ce que** les structures (114) sont espacées les unes des autres d'une distance supérieure ou égale à 10 micromètres.

9. Membrane électrolytique (8) pour pile à combustible présentant, sur au moins l'une de ses faces, des structures (114) telles que définies dans l'une des revendications 5 à 8.

10. Couche de diffusion des gaz (8) pour pile à combustible présentant, sur au moins l'une de ses faces, des structures (114) telles que définies dans l'une des revendications 5 à 8.

11. Pile à combustible comprenant une couche catalytique selon l'une des revendications 5 à 8 ou une membrane électrolytique selon la revendication 9 ou au moins une couche de diffusion des gaz selon la revendication 10.
